# EUROPEAN PATENT SPECIFICATION

(11) **EP 2 441 572 B1**
(45) Date of publication and mention of the grant of the patent: **20.08.2014**
(21) Application number: 11008383.9
(22) Date of filing: 18.10.2011
(51) Int. Cl.: B24B 5/36, B08B 15/02, B24B 55/04, B29D 30/54

(54) **Tire buffing apparatus with improved dust control**
Reifenpoliervorrichtung mit verbesserter Staubkontrolle
Appareil de brossage de pneumatiques avec un contrôle amélioré des poussières

(30) Priority: 18.10.2010 US 394216 P
(43) Date of publication of application: 18.04.2012
(73) Proprietor: Bridgestone Bandag, LLC, Muscatine IA 52761 (US)
(72) Inventor: Kost, Troy Allen, Le Claire, Iowa 52753 (US); Lindsay, John Stewart, Muscatine, Iowa 52761 (US); Hanson, Seth Raymond, Bettendorf, Iowa 52722 (US); Wagner, Quentin Lee, Silvis, Illinois 51282 (US); Engebretson, Matthew Steven, Davenport, Iowa 52806 (US)
(74) Representative: Banzer, Hans-Jörg

(56) References cited:
- EP-A1- 2 532 511
- WO-A1-88/03866
- DE-A1- 2 057 105
- DE-A1- 3 934 676
- JP-A- 2002 067 031
- JP-A- 2008 126 479
- US-A- 3 162 233
- US-A- 5 279 076
- US-B2- 7 040 371

## Description

### BACKGROUND OF THE INVENTION

Tire buffers are generally used in tire retreading operations to remove the old, worn tread and to prepare the tire casing for receiving the new, replacement tread. More specifically, a tire casing that is to be retreaded is buffed to remove excess rubber. The buffing of the casing can also be used to provide a substantially even texture on the crown of the casing and to shape the casing into a predetermined profile that is complementary to the new, replacement tread that is to be attached to the tire casing. After buffing, the tire casing undergoes various other processing steps related to the attachment of the new tread, including generally application of a cushion gum to the casing, placement of the new tread, stitching of the new tread onto the tire casing and curing.

A tire buffing operation produces a great deal of rubber dust. In order to help control this dust, tire buffers typically include a vacuum system that is designed to suction away the rubber particles as they are removed from the tire. Unfortunately, while such vacuum systems are effective in removing a large proportion of the dust particles that are produced, they fail to capture all of rubber dust. The dust that escapes the vacuum system collects on the buffer machinery and scatters about the area around the buffer. As a result, the buffer and the surrounding area must be cleaned periodically with the rubber dust being collected for appropriate disposal. This periodic maintenance is both time consuming and costly, particularly because it often requires the buffer to be shutdown.

DE 39 34 676 A1 discloses an apparatus which includes a grinding device configured to interact with a tire. The tire is moved towards and away from the grinding device for engagement with the grinding device. The grinding device is installed in a housing in which part of the tire may be received.

DE 2 057 105 A1 relates to a grinding tool which is engageable with a tire. An extractor fan partially surrounds the grinding tool.

US 5,279,076 A discloses a dust collection apparatus for collecting dust during the grinding of tires. A collection head is provided which has a series of brushes. The brushes are arranged to contact a surface of a tire in proximity to where the grinding takes place.

EP 2 532 511 A1 (document according to Art. 54(3) EPC) discloses a buffing apparatus for retreaded tires. The apparatus includes a grinder, left and right scatter shields, and upper and lower scatter shields.

### SUMMARY

Tire buffing apparatuses as defined by the independent claims 1 and 9 are provided according to embodiments. The dependent claims define further embodiments.

### BRIEF DESCRIPTION OF THE SEVERAL VIEWS OF THE DRAWING(S)

Fig. 1 is a front perspective view of an exemplary tire buffing apparatus including improved dust control systems in accordance with one embodiment of the present invention.
Fig. 2 is a rear perspective view of the tire buffing apparatus of Fig. 1.
Fig. 3 is a top view of the tire buffing apparatus of Fig. 1.
Fig. 4 is a rear perspective view of the tire buffing apparatus of Fig. 1 showing the main door in an open position.
Fig. 5 is a front perspective view of the tire buffing apparatus of Fig. 1 showing the main door in an open position.
Fig. 6 is a rear perspective view of the tire buffing apparatus of Fig. 1 showing the inner door in an open position.
Fig. 7 is a front perspective view of the tire buffing apparatus of Fig. 1 showing the inner door being moved by the rasp pedestal to an open position.
Fig. 8 is a top view of the tire buffing apparatus of Fig. 1 showing the inner door being moved by the rasp pedestal to an open position.
Fig. 9 is a rear perspective view of the tire buffing apparatus of Fig. 1 showing an illustrative embodiment of rear dust shields.
Fig. 10 is an enlarged perspective view of a portion of the rasp pedestal of the tire buffing apparatus of Fig. 1 showing the primary and auxiliary brushes.

### DETAILED DESCRIPTION OF THE INVENTION

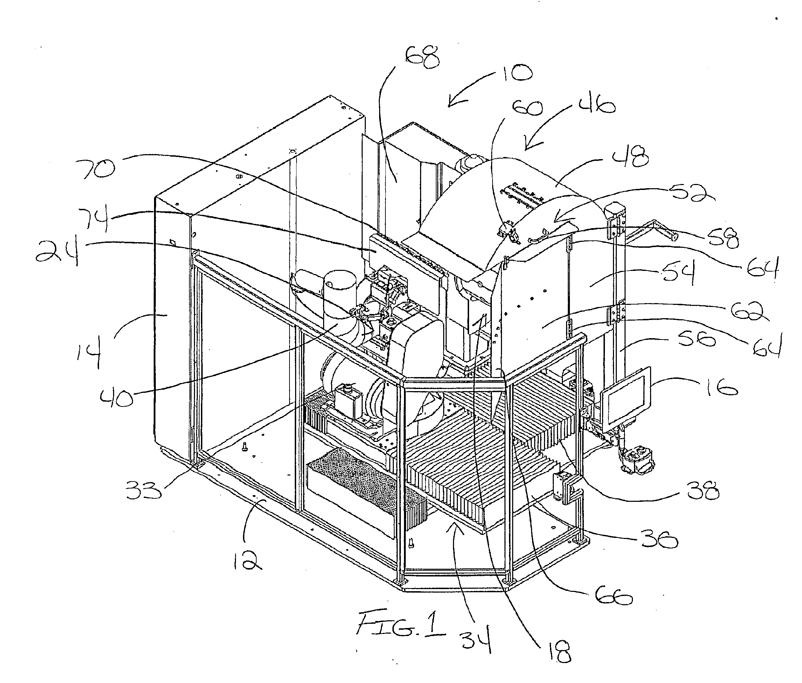

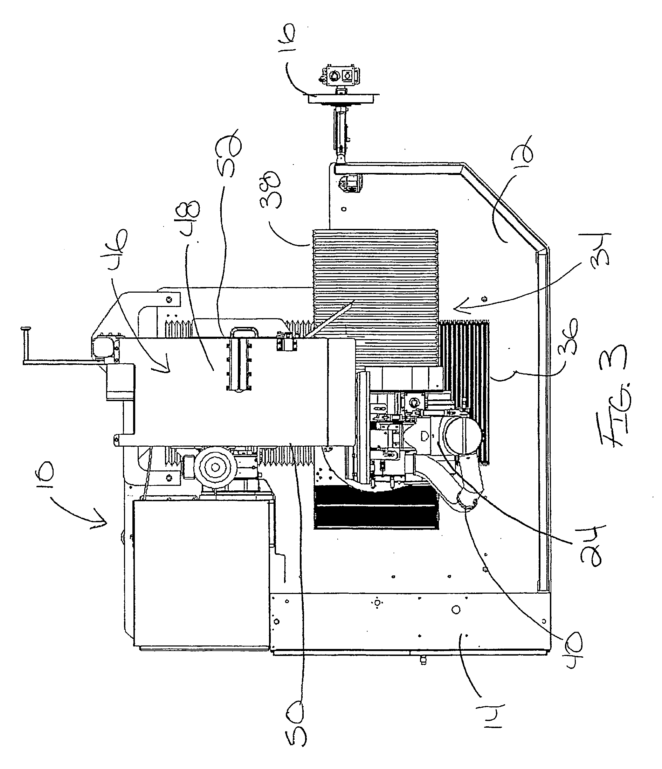

Referring to Figs. 1-3 of the drawings there is shown an illustrative tire buffing apparatus 10 or tire buffer constructed in accordance with the present invention. The illustrated tire buffer 10 is operable to buff a tire casing and impart a texture thereto. A tire casing generally includes a crown portion bordered on either side by a shoulder portion and a respective sidewall. In a generally known manner, the buffer 10 is configured to be able to buff, at least, the crown and shoulder portions of the tire casing. In the illustrated embodiment, the buffer 10 includes a base 12 that supports the various components of the buffer 10. The illustrated buffer 10 further includes an electrical enclosure 14 within which electrical components associated with the operation of the buffer can be housed and an operator station 16 that can be used by an operator to direct buffing operations.

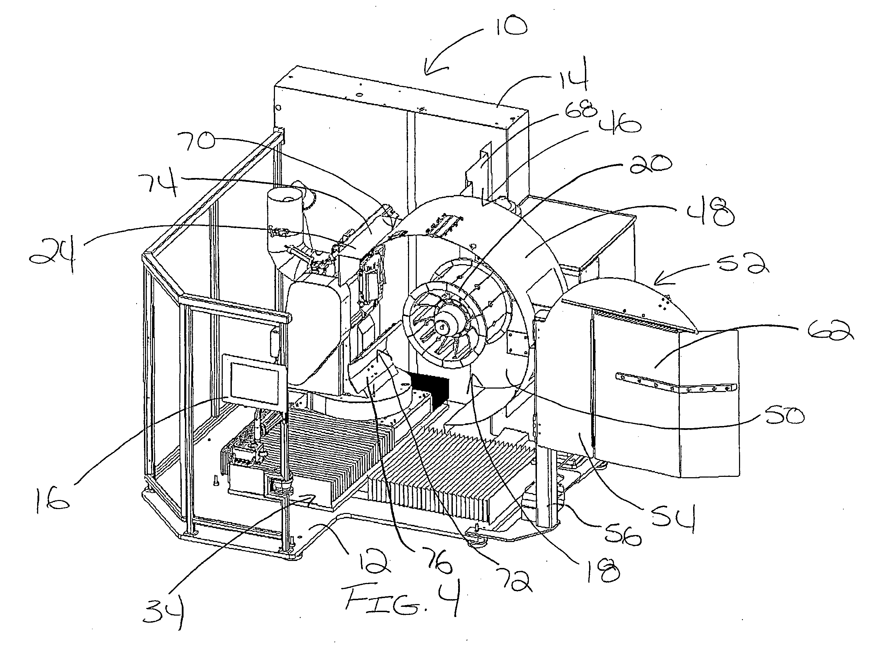

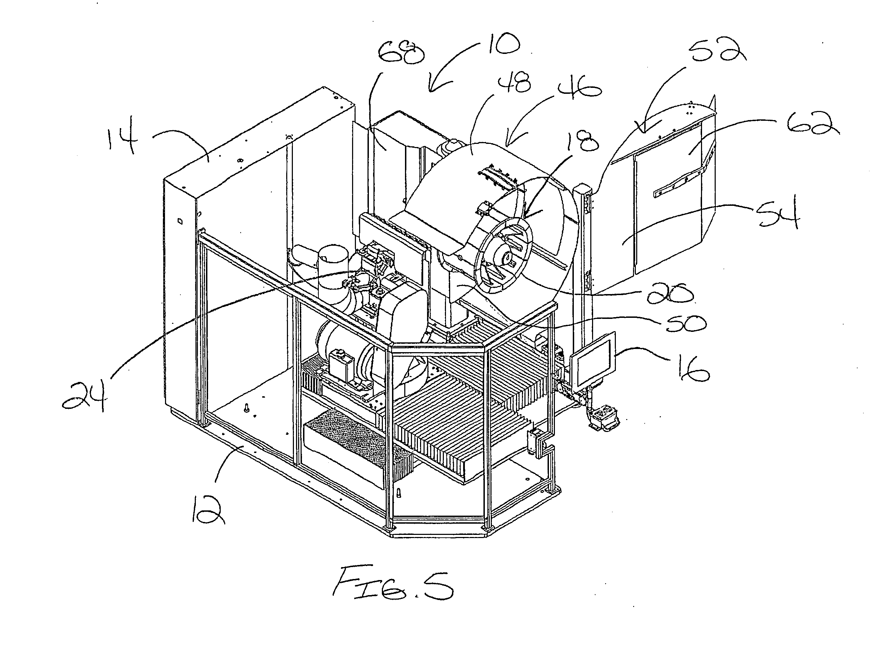

For supporting a tire casing to be buffed, the buffer 10 includes a hub assembly 18 (shown in Figs. 4 and 5). The illustrated hub assembly 18 is supported on the base 12 and includes a chuck 20 on which a tire is mountable. The chuck 20 is rotatable so that a tire supported thereon can be rotated during buffing operations. Additional details regarding the construction and operation of the buffer can be found in U.S. Patent 7,040,371, the disclosure of which is hereby incorporated herein by reference.

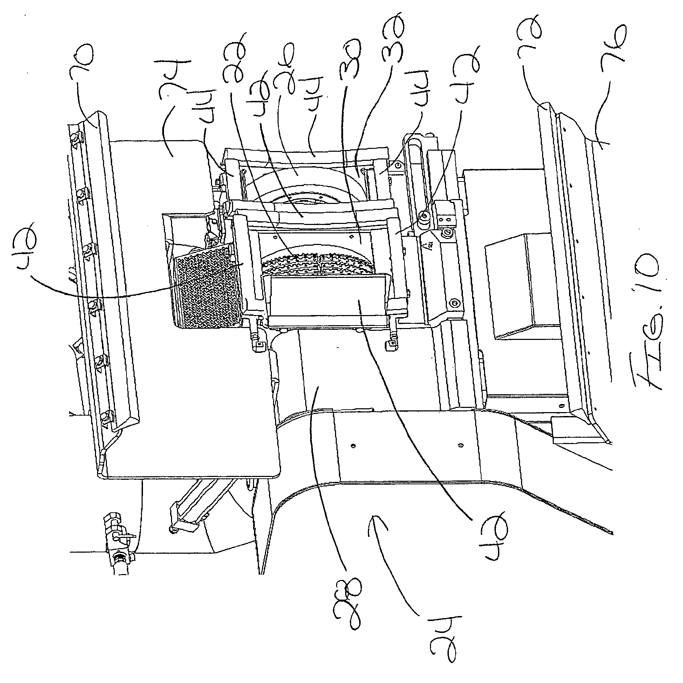

For supporting a rotating rasp 22 that can be used to remove the material from a tire casing, the buffer 10 includes a rasp pedestal 24. Additionally, for imparting a desired texture on the casing, the illustrated rasp pedestal 24 further rotatably supports a texturizing brush 26. The rasp 22 and texturizing brush 26 are best shown in Fig. 10. In this case, the rotating rasp 22 and texturizing brush 26 are supported adjacent one another near the upper end of the rasp pedestal 24. The rasp 22 and texturing brush 26 are supported on the pedestal 24 in a housing 28 that includes respective openings 30, 32 through which a portion of the rasp 22 and texturizing brush extend 26 so that they can engage a tire casing. In this case, the rasp pedestal 24 is supported on the base 12 and is configured such that it is rotatable about its vertical axis to allow the rasp 22 and texturizing brush 26 to be pivoted relative to a tire casing supported on the hub assembly 18. The rasp 22 and texturizing brush 26 can be supported on that same rotating shaft, which in this case is operatively connected to a drive motor 33 supported on the rasp pedestal 24. For ease of reference herein, the portion of the buffer 10 where the rasp pedestal 24 is arranged is referred to as the front or forward end of the buffer 10, while the opposing end of the buffer 10 away from the rasp pedestal 24 is referred to as the rear end of the buffer. Additionally, the side of the buffer 10 on which the electrical enclosure 14 is arranged is referred to herein as the inner side with the opposing side of the buffer 10 with the operator station 16 being referred to as the outer side.

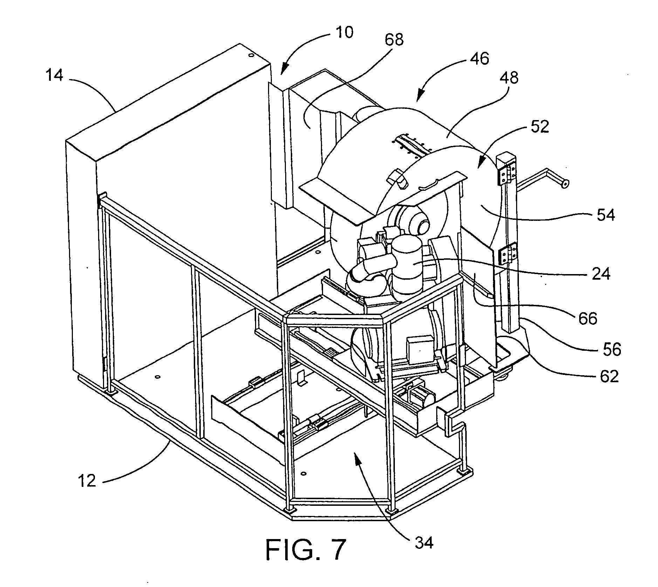

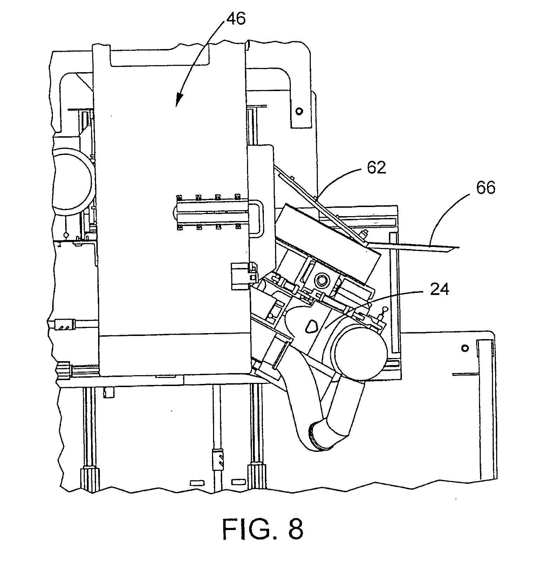

For providing further movement of the pedestal 24, and thereby the rasp 22 and texturizing brush 26, relative to the hub assembly 18 and a tire casing supported thereon, the rasp pedestal 24 can be supported on the base 12 by a positioning assembly 34. In this case, the positioning assembly 34 is configured to move the rasp pedestal 24 along perpendicular, horizontal x-y axes relative to the hub assembly 18. To this end, the positioning assembly 34 can include slidable x- and y-tables 36, 38 (see Figs. 1-3) that are arranged perpendicular to each other on the base 12 and actuators for driving movement of the tables 36, 38 (and thereby the pedestal 24) relative to the base 12. The positioning assembly 34, along with the rotatable configuration of the rasp pedestal 24, enables the rasp 22 and texturizing brush 26 to be brought into operative engagement with a tire casing supported on the hub assembly 18 at different angles relative to the casing so that, for example, the rasp 22 and brush 26 can be positioned to buff both the crown and the shoulders of the casing (see, e.g., Figs. 7 and 8).

For removing debris that results from operation of the buffer 10, a vacuum system can be provided. The vacuum system can include a dust collection system that connects via ducts 40 with the housing 28 on the rasp pedestal 24 in which the rasp 22 and texturizing brush 26 are supported. In a known manner, the vacuum system can further include an air pump in communication with the ducts 40 that is operable to provide a suction force at the openings 30, 32 in the housing 28 through which the rasp 22 and texturizing brush 26 extend (see Fig. 10). This suction draws the particles and other materials that are removed from the tire casing by the rasp 22 and the texturing brush 26 during buffing through the openings 30, 32 and into the housing 28 where it is transferred via the ducts 40 to the collection system. The openings 30, 32 for the rasp 22 and the texturizing brush 26 can be contoured to complement the contour of a tire casing. Additionally, as shown in Fig. 10, each opening 30, 32 can be provided with a primary brush assembly including respective primary brushes 42, 44 extending around the perimeter of the opening. The primary brushes 42, 44 engage surface of tire casing during buffing to help prevent the material removed from the casing from escaping the opening. In the illustrated embodiment, the primary brush 42 extending around the perimeter of the rasp opening 30 includes a spring loaded brush 45 along one side of the opening 30. The primary brushes 42, 44, along with the contour of the openings 30, 32, also help provide a seal with the tire casing to increase the suction power of the vacuum system.

To further prevent dust and other debris produced during buffing from accumulating on the machine and in the surrounding area, the tire buffer 10 can include additional dust control systems that help confine the dust to the immediate vicinity of the tire casing being buffed, simplifying cleaning operations and eliminating the scattering of dust and debris across the surrounding area. The additional dust control systems can include a dust enclosure 46 that at least partially surrounds a tire casing when it is supported on the hub assembly 18. In the illustrated embodiment, the dust enclosure includes an arcuate shaped sidewall 48 that generally matches the perimeter shape of a tire casing. In particular, the sidewall 48 is configured to extend over at least a portion of the circumferential surface of a tire casing mounted on the hub assembly 18. To allow the rasp pedestal 24 to still have access to the tire casing on the hub assembly 18, the sidewall 48 only extends partially around the perimeter of the tire casing leaving an opening on, at least, the front side of the hub assembly through which the rasp 22 and texturizing brush 26 can be brought into engagement with the tire casing.

The dust enclosure 46 can further include vertical inner 50 and outer walls 52 connected to the sidewall 48. As shown in Figs. 4 and 5, the inner wall 50 is configured to extend at least partially across and in covering relation to the side of a tire casing. The inner wall 50 further includes a cut-out portion through which the shaft for the chuck 20 of the hub assembly 18 can extend. In this instance, the inner wall 50 does not extend all the way forward along the inner side of a tire casing in order to allow space for the rasp pedestal 24 when it moves to a inside buffing position relative to the hub assembly 18 and thus the inner wall 50 of the enclosure 46 only partially covers the side of a tire casing on the hub assembly 18.

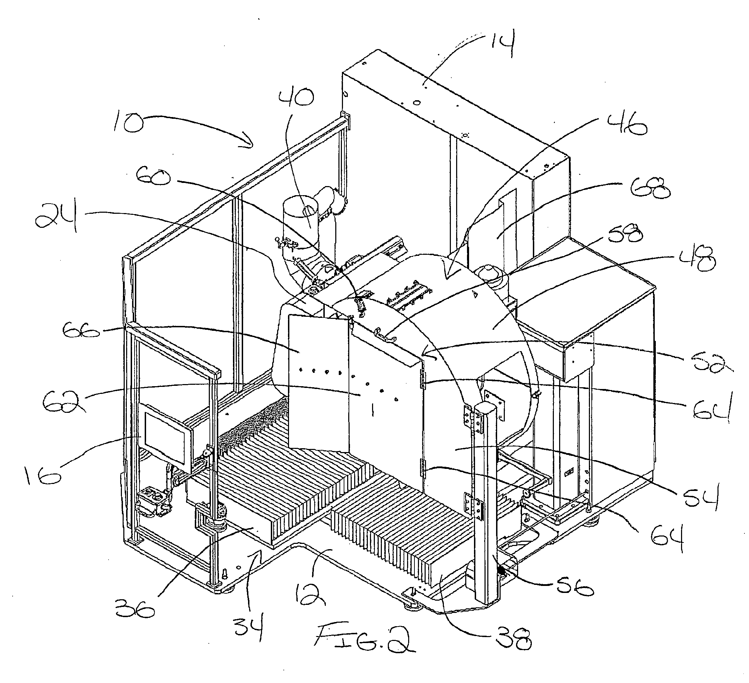

To allow tire casings to be mounted on and removed from the hub assembly 18, the outer wall 52 can be configured as a main door 54 that can be selectively opened and closed: More specifically, the main door 54, in this case, is hinged to a vertical support 56 for movement relative to the sidewall 48 and inner wall 50 between an open position (shown in Figs. 4 and 5) wherein the main door 54 is arranged to the side to allow a tire casing to be placed on or removed from the hub assembly 18 and a closed position (shown, e.g., in Figs. 1-3) wherein the main door 54 closes off the outer side of the dust enclosure 46. A handle 58 (see Figs. 1 and 2) can be provided on the face of the main door 54 to facilitate opening and closing by a user. Additionally, a lock 60 can be provided that can be used to secure the body of the main door 54 to the sidewall 48 of the dust enclosure 46 when the main door 54 is in the closed position.

In order to allow space for the rasp pedestal 24 to move into a outside buffing position (i.e., along the outside of a tire casing mounted on the hub assembly 18), the outer wall 52 could include an inner door 62 that is hinged to the main door 54 of the sidewall for movement between open and closed positions relative to the main door 54. In the illustrated embodiment, the inner door 62 is arranged generally at the forward end of the main door 54 and includes a flared or angled outward portion 66 at its forward end. In the closed position (shown in Figs. 1-3), the main door 54 and inner door 62 extend across and over the outside of a tire casing mounted on the hub assembly 18. Unlike the inner wall 50 of the dust enclosure that stops short of extending all the way forward, the outer wall 52 in the illustrated embodiment extends across substantially all of the side of a tire casing mounted on the hub assembly 18 when the inner and main doors 62, 54 are closed.

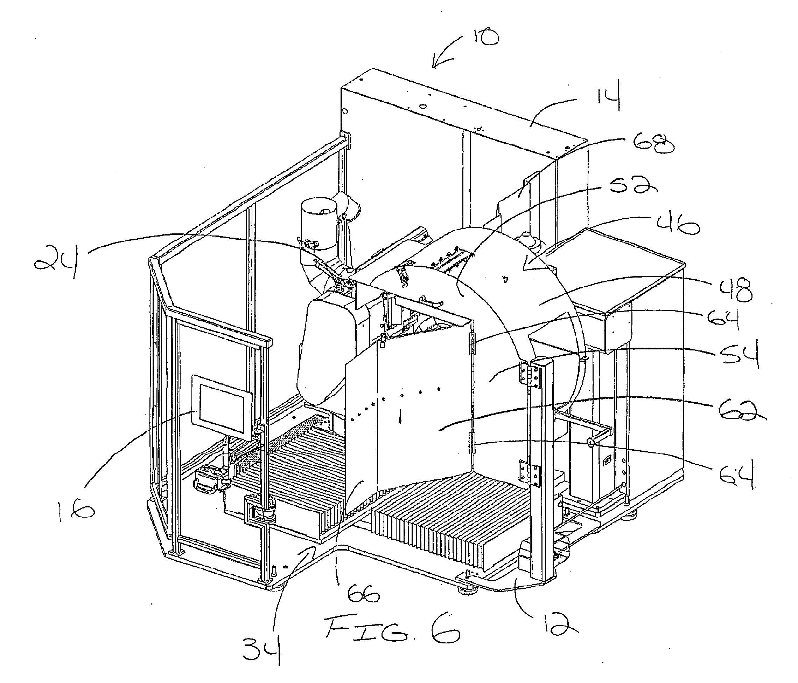

The inner door 62 is generally in the closed position when the rasp 22 or texturizing brush 26 are engaged with the crown of the tire or when in a side buffing position on the inside of a tire casing. When the rasp pedestal 24 moves the rasp 22 and texturizing brush 26 towards a side buffing position on the outside of a tire (referenced as 67 in Figs. 7 and 8) casing mounted on the hub assembly 18, the rasp pedestal engages first against the flared portion 66 of the inner door 62 and then against the main body of the inner door 62 and thereby pivots the inner door 62 into an open position relative to the main door 54 as shown in Figs. 6-8. The hinge mechanism 64 for the inner door 62 can include a spring that is arranged and configured such that the rasp pedestal 24 pushes the inner door 62 open against the force of the spring. Thus, when the rasp pedestal 24 moves out of that outer side buffing position and back towards a position over the crown of the tire casing, the spring automatically pulls the inner door 62 back to the closed position.

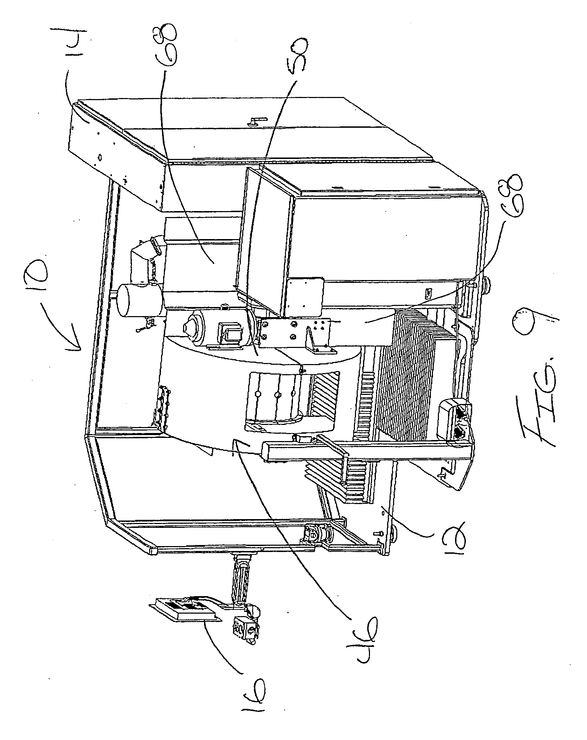

To help contain any dust that may escape past the inner wall 50 of the dust enclosure 46 at its forward end where the wall does not extend and travel towards the rear of the buffer (i.e., in the direction away from the rotating rasp 22 and texturizing brush 26), one or more dust shields may be provided. As best shown in Fig. 9, in this case, the dust enclosure 46 includes an inner, rear dust shield 68 that extends vertically and is mounted in outwardly extending relation to the outside face of the inner sidewall 50. The inner rear dust shield is configured to provide a vertical shield that extends the length of the inner wall 50 as well as a short distance beyond a lower edge of the wall. According to one preferred embodiment, the inner, rear dust shield comprises two separate shields that can be laterally offset from each other a short distance. It will be appreciated that the inner rear dust shields could be combined into a single unitary piece, however, in this case dividing the dust shield into two pieces eases the assembly process.

To help contain dust and other debris that escapes the primary brushes 42, 44 extending around the rasp and texturizing brush openings 30, 32, an auxiliary brush assembly can be provided. As shown in Fig. 10, in the illustrated embodiment, the auxiliary brush assembly includes upper and lower auxiliary brushes 70, 72 with the upper auxiliary brush 70 being intended to capture dust that may escape the primary brushes 42, 44 toward the top of the buffer and the lower auxiliary brush 72 intended to capture dust that may escape the primary brushes 42, 44 toward the bottom of the buffer. To this end, the upper auxiliary brush 70 is arranged vertically above the upper side of the primary brushes 42, 44 for the rasp and texturizing brush and the lower auxiliary brush 72 is arranged vertically below the lower side of the primary brushes 42, 44. Both the upper and lower auxiliary brushes 70, 72 are configured and positioned such that they can engage with the surface of a tire casing during a buffing operation in order to provide a barrier against the travel of dust. Moreover, the upper and lower auxiliary brushes 70, 72 are wide enough that they provide a dust barrier that extends directly above and directly below both the rasp and the texturizing brush 22, 26. The auxiliary brushes 70, 72 are supported on the rasp pedestal 24 and thus move with the pedestal as it moves relative to the hub assembly 18 thereby providing a dust barrier that is effective in the side buffing positions as well as a crown buffing position. In this case, the upper auxiliary brush 70 is mounted on an upper support 74 that extends upward from the housing 28 containing the rasp and the lower auxiliary brush 72 is mounted on a lower support 76 that extends downward from the housing (see Figs. 4 and 10). Each support 74, 76 in the illustrated embodiment orients the respective auxiliary brush 70, 72 such that the brushes extend generally radially relative to a tire casing when brought into engagement therewith.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A tire buffing apparatus (10) for buffing a tire casing comprising:
a hub assembly (18) for supporting and rotating a tire casing;
a rasp pedestal (24) including a rasp, the rasp (22) being selectively engageable with a tire casing supported on the hub assembly (18); and
a dust enclosure (46) at least partially surrounding a tire casing mounted to the hub assembly (18) and configured to help contain dust and other debris produced when the rasp (22) engages a tire casing on the hub assembly (18)
**characterized in that**
the rasp pedestal (24) supports a texturizing brush (26) which is selectively engageable with a tire casing supported on the hub assembly (18), and
the dust enclosure (46) includes an arcuate shaped sidewall (48) that extends around a part of a circumferential surface of a tire casing supported on the hub assembly (18) leaving an opening through which the rasp (22) and the texturizing brush (26) are selectively engageable with a tire casing supported on the hub assembly (18).

2. The tire buffing apparatus (10) of claim 1 wherein the dust enclosure (46) includes inner and outer walls (50, 52) connected to the sidewall (48).

3. The tire buffing apparatus (10) of claim 2 wherein the outer wall (52) includes a main door (54) that is supported for movement between open and closed positions relative to the sidewall (48) and inner wall (50).

4. The tire buffing apparatus (10) of claim 3 wherein the outer wall (52) includes an inner door (62) that is supported for movement between open and closed positions relative to a portion of the main door (54).

5. The tire buffing apparatus (10) of claim 4 wherein the rasp pedestal (24) is moveable into a side buffing position and the inner door (62) is configured so that movement of the rasp pedestal (24) into the side buffing position engages the inner door (62) and moves the inner door (62) from the closed position to the open position.

6. The tire buffing apparatus (10) of any one of claims 2-5 wherein a dust shield extends outwardly from the inner wall (50) of the dust enclosure (46).

7. The tire buffing apparatus (10) of any one of claims 2-6 further including a primary brush (42) assembly arranged on the rasp pedestal (24) and at least partially surrounding at least a portion of the rasp (22) and configured to be engageable with a tire casing mounted on the hub assembly (18) when the rasp (22) engages the tire casing, the primary brush (42) assembly including an upper and a lower side.

8. The tire buffing apparatus (10) of claim 7 further including an auxiliary brush assembly supported on the rasp pedestal (24) and including an upper auxiliary brush (70) arranged vertically above the upper side of the primary brush (42) assembly and a lower auxiliary brush (72) arranged vertically below the lower side of the primary brush (42) assembly.

9. A tire buffing apparatus (10) for buffing a tire casing comprising:
a hub assembly (18) for supporting and rotating a tire casing,
a rasp pedestal (24) including a rasp (22), the rasp (22) being selectively engageable with a tire casing supported on the hub assembly (18); and
a primary brush (42) assembly arranged on the rasp pedestal (24) and at least partially surrounding at least a portion of the rasp (22) and configured to be engageable with a tire casing mounted on the hub assembly (18) when the rasp (22) engages the tire casing, the primary brush (42) assembly including an upper and a lower side;
**characterized by**
an auxiliary brush assembly supported on the rasp pedestal (24) and including an upper auxiliary brush (70) arranged vertically above the upper side of the primary brush assembly (42) and a lower auxiliary brush (72) arranged vertically below the lower side of the primary brush assembly (42).

10. The tire buffing apparatus (10) of claim 9 wherein the rasp pedestal (24) supports a texturizing brush (26) which is selectively engageable with a tire casing supported on the hub assembly (24).

11. The tire buffing apparatus (10) of claim 10 wherein a second primary brush (44) assembly is arranged on the rasp pedestal (24) and at least partially surrounding at least a portion of the texturizing brush (26) and configured to be engageable with a tire casing mounted on the hub assembly (18) when the texturizing brush (26) engages the tire casing, the second primary brush (44) assembly including an upper and a lower side.

12. The tire buffing apparatus (10) of claim 11 wherein the upper auxiliary brush (70) is arranged vertically above the upper side of the second primary brush (44) assembly and the lower auxiliary brush (72) is arranged vertically below the lower side of the second primary brush (14) assembly.

13. The tire buffing apparatus (10) of any one of claims 9-12 further including a dust enclosure (46) at least partially surrounding a tire casing mounted to the hub assembly (18) and configured to help contain dust and other debris produced when the rasp (22) engages a tire casing on the hub assembly (18).

14. The tire buffing apparatus (10) of claim 13 wherein the dust enclosure (46) includes an arcuate shaped sidewall (48) that extends around at least part of a circumferential surface of a tire casing supported on the hub assembly (18).

15. The tire buffing apparatus (10) of claim 14 wherein the dust enclosure (46) includes inner and outer walls (50, 52) connected to the sidewall (48).

16. The tire buffing apparatus (10) of claim 15 wherein the outer wall (52) includes a main door (54) that is supported for movement between open and closed positions relative to the sidewall (48) and inner wall (52).

17. The tire buffing apparatus (10) of claim 16 wherein the outer wall (52) includes an inner door (62) that is supported for movement between open and closed positions relative to a portion of the main door (54).

18. The tire buffing apparatus (10) of any one of claims 15-17 wherein the rasp pedestal (24) is moveable into a side buffing position and the inner door (62) is configured so that the movement of the rasp pedestal (24) into the side buffing position engages the inner door (62) and moves the inner door (62) from the closed position to the open position.

## Patentansprüche

1. Reifenabrauvorrichtung (10) zum Abrauen einer Reifenkarkasse, umfassend:
eine Nabenanordnung (18) zum Stützen und Rotieren einer Reifenkarkasse;
einen Raspelsockel (24), der eine Raspel umfasst, wobei die Raspel (22) selektiv mit einer an der Nabenanordnung (18) abgestützten Reifenkarkasse in Eingriff bringbar ist; und
ein Staubgehäuse (46), das eine an der Nabenanordnung (18) angebrachte Reifenkarkasse wenigstens teilweise umgibt und eingerichtet ist, um ein Zurückhalten von Staub und anderen Bruchstücken, die erzeugt werden, wenn die Raspel (22) mit einer Reifenkarkasse an der Nabenanordnung (18) in Eingriff steht, zu unterstützen,
**dadurch gekennzeichnet, dass**
der Raspelsockel (24) eine Texturierungsbürste (26) trägt, die mit einer an der Nabenanordnung (18) abgestützten Reifenkarkasse selektiv in Eingriff bringbar ist, und
das Staubgehäuse (46) eine bogenförmige Seitenwand (48) umfasst, die sich um einen Teil einer Umfangsoberfläche einer an der Nabenanordnung (18) abgestützten Reifenkarkasse erstreckt, wobei eine Öffnung bestehen bleibt, durch die die Raspel (22) und die Texturierungsbürste (26) selektiv mit einer an der Nabenanordnung (18) abgestützten Reifenkarkasse in Eingriff bringbar sind.

2. Reifenabrauvorrichtung (10) nach Anspruch 1, wobei das Staubgehäuse (46) Innen- und Außenwände (50, 52) umfasst, die mit der Seitenwand (48) verbunden sind.

3. Reifenabrauvorrichtung (10) nach Anspruch 2, wobei die Außenwand (52) eine Haupttür (54) umfasst, die für eine Bewegung zwischen offenen und geschlossenen Positionen relativ zu der Seitenwand (48) und der Innenwand (50) gelagert ist.

4. Reifenabrauvorrichtung (10) nach Anspruch 3, wobei die Außenwand (52) eine innere Tür (62) umfasst, die für eine Bewegung zwischen offenen und geschlossenen Positionen relativ zu der Haupttür (54) gelagert ist.

5. Reifenabrauvorrichtung (10) nach Anspruch 4, wobei der Raspelsockel (24) in eine Seitenabrauposition bewegbar ist, und wobei die innere Tür (62) derart eingereichtet ist, dass eine Bewegung des Raspelsockels (24) in die Seitenabrauposition zu einem Eingriff mit der inneren Tür (62) führt und die innere Tür (62) von der geschlossenen Position zu der offenen Position bewegt.

6. Reifenabrauvorrichtung (10) nach einem der Ansprüche 2-5, wobei sich eine Staubabschirmung von der Innenwand (50) des Staubgehäuses (46) nach außen erstreckt.

7. Reifenabrauvorrichtung (10) nach einem der Ansprüche 2-6, welche weiterhin eine Primärbürsten (42)-Anordnung umfasst, die an dem Raspelsockel (24) angeordnet ist und wenigstens einen Abschnitt der Raspel (22) wenigstens teilweise umgibt und eingerichtet ist, um mit einer an der Nabenanordnung (18) angebrachten Reifenkarkasse in Eingriff gebracht zu werden, wenn die Raspel (22) mit der Reifenkarkasse in Eingriff steht, wobei die Primärbürsten (42)-Anordnung eine obere und eine untere Seite umfasst.

8. Reifenabrauvorrichtung (10) nach Anspruch 7, welche weiterhin eine Hilfsbürsten-Anordnung umfasst, die an dem Raspelsockel (24) angeordnet ist und die eine obere Hilfsbürste (70), die vertikal über der oberen Seite der Primärbürsten (42)-Anordnung angeordnet ist, und eine untere Hilfsbürste (72), die vertikal unter der unteren Seite der Primärbürsten (42)-Anordnung angeordnet ist, umfasst.

9. Reifenabrauvorrichtung (10) zum Abrauen einer Reifenkarkasse, umfassend:
eine Nabenanordnung (18) zum Stützen und Rotieren einer Reifenkarkasse;
einen Raspelsockel (24), der eine Raspel (22) aufweist, wobei die Raspel (22) selektiv mit einer an der Nabenanordnung (18) abgestützten Reifenkarkasse in Eingriff bringbar ist; und
eine Primärbürsten (42)-Anordnung, die an dem Raspelsockel (24) angeordnet ist und wenigstens einen Abschnitt der Raspel (22) wenigstens teilweise umgibt und die eingerichtet ist, um mit einer an der Nabenanordnung (18) angebrachten Reifenkarkasse in Eingriff gebracht zu werden, wenn die Raspel (22) mit der Reifenkarkasse in Eingriff steht, wobei die Primärbürsten (42)-Anordnung eine obere Seite und eine untere Seite umfasst;
**gekennzeichnet durch**
eine Hilfsbürsten-Anordnung, die von dem Raspelsockel (24) getragen wird und eine obere Hilfsbürste (70), die vertikal über der oberen Seite der Primärbürsten (42)-Anordnung angeordnet ist, und eine untere Hilfsbürste (72), die vertikal unter der unteren Seite der Primärbürsten (42)-Anordnung angeordnet ist, umfasst.

10. Reifenabrauvorrichtung (10) nach Anspruch 9, wobei der Raspelsockel (24) eine Texturierungsbürste (26) trägt, die mit einer an der Nabenanordnung (18) abgestützten Reifenkarkasse selektiv in Eingriff bringbar ist.

11. Reifenabrauvorrichtung (10) nach Anspruch 10, wobei eine zweite Primärbürsten (44)-Anordnung an dem Raspelsockel (24) angeordnet ist und wenigstens einen Abschnitt der Texturierungsbürste (26) wenigstens teilweise umgibt und eingerichtet ist, um mit einer an der Nabenanordnung (18) angebrachten Reifenkarkasse in Eingriff gebracht zu werden, wenn die Texturierungsbürste (26) mit der Reifenkarkasse in Eingriff steht, wobei die zweite Primärbürsten (44)-Anordnung eine obere Seite und eine untere Seite umfasst.

12. Reifenabrauvorrichtung (10) nach Anspruch 11, wobei die obere Hilfsbürste (70) vertikal über der oberen Seite der zweiten Primärbürsten (44)-Anordnung angeordnet ist und die untere Hilfsbürste (72) vertikal unter der unteren Seite der zweiten Primärbürsten (44)-Anordnung angeordnet ist.

13. Reifenabrauvorrichtung (10) nach einem der Ansprüche 9-12, welche weiterhin ein Staubgehäuse (46), das eine an der Nabenanordnung (18) angebrachte Reifenkarkasse wenigstens teilweise umgibt und das eingerichtet ist, um ein Zurückhalten von Staub und anderen Bruchstücken, die erzeugt werden, wenn die Raspel (22) mit einer Reifenkarkasse an der Nabenanordnung (18) in Eingriff steht, zu unterstützen, umfasst.

14. Reifenabrauvorrichtung (10) nach Anspruch 13, wobei das Staubgehäuse (46) eine bogenförmige Seitenwand (48) umfasst, die sich wenigstens um einen Teil einer Umfangsoberfläche einer an der Nabenanordnung (18) abgestützten Reifenkarkasse erstreckt.

15. Reifenabrauvorrichtung (10) nach Anspruch 14, wobei das Staubgehäuse (46) Innen- und Außenwände (50, 52) umfasst, die mit der Seitenwand (48) verbunden sind.

16. Reifenabrauvorrichtung (10) nach Anspruch 15, wobei die Außenwand (52) eine Haupttür (54) umfasst, die für eine Bewegung zwischen offenen und geschlossenen Positionen relativ zu der Seitenwand (48) und der Innenwand (50) gelagert ist.

17. Reifenabrauvorrichtung (10) nach Anspruch 16, wobei die Außenwand (52) eine innere Tür (62) umfasst, die für eine Bewegung zwischen offenen und geschlossenen Positionen relativ zu der Haupttür (54) gelagert ist.

18. Reifenabrauvorrichtung (10) nach einem der Ansprüche 15-17, wobei der Raspelsockel (24) in eine Seitenabrauposition bewegbar ist und wobei die innere Tür (62) derart eingereichtet ist, dass die Bewegung des Raspelsockels (24) in die Seitenabrauposition zu einem Eingriff mit der inneren Tür (62) führt und die innere Tür (62) von der geschlossenen Position zu der offenen Position bewegt.

## Revendications

1. Appareil de brossage de pneumatique (10) pour brosser une enveloppe de pneu, comprenant :
un ensemble formant moyeu (18) pour supporter et faire tourner une enveloppe de pneu ;
un piédestal de râpe (24) comprenant une râpe, la râpe (22) pouvant être engagée sélectivement avec une enveloppe de pneu supportée sur l'ensemble formant moyeu (18) ; et
un boîtier étanche à la poussière (46) entourant, au moins en partie, une enveloppe de pneu montée sur l'ensemble formant moyeu (18) et conçu pour aider à confiner la poussière et d'autres débris produits lorsque la râpe (22) vient en engagement avec une enveloppe de pneu sur l'ensemble formant moyeu (18)
**caractérisé en ce que**
le piédestal de râpe (24) supporte une brosse de texturisation (26) qui est apte à venir en engagement sélectivement avec une enveloppe de pneu sur l'ensemble formant moyeu (18), et
le boîtier étanche à la poussière (46) comprend une paroi latérale de forme arquée (48) qui s'étend autour d'une partie d'une surface circonférentielle d'une enveloppe de pneu supportée sur l'ensemble formant moyeu (18), en laissant une ouverture par laquelle la râpe (22) et la brosse de texturisation (26) peuvent venir en engagement sélectivement avec une enveloppe de pneu supportée sur l'ensemble formant moyeu (18).

2. Appareil de brossage de pneumatique (10) selon la revendication 1, dans lequel le boîtier étanche à la poussière (46) comprend des parois interne et externe (50, 52) reliées à la paroi latérale (48).

3. Appareil de brossage de pneumatique (10) selon la revendication 2, dans lequel la paroi externe (52) comprend une porte principale (54) qui est supportée pour déplacement entre des positions ouverte et fermée relativement à la paroi latérale (48) et la paroi interne (50).

4. Appareil de brossage de pneumatique (10) selon la revendication 3, dans lequel la paroi externe (52) comprend une porte interne (62) qui est supportée pour déplacement entre des positions ouverte et fermée relativement à une partie de la porte principale (54).

5. Appareil de brossage de pneumatique (10) selon la revendication 4, dans lequel le piédestal de râpe (24) est apte à se déplacer jusque dans une position de brossage latérale et la porte interne (62) est configurée de manière que le déplacement du piédestal de râpe (24) jusque dans la position de brossage latérale engage la porte interne (62) et déplace la porte interne (62) de la position fermée à la position ouverte.

6. Appareil de brossage de pneumatique (10) selon l'une quelconque des revendications 2 à 5, dans lequel un écran de protection contre la poussière s'étend vers l'extérieur à partir de la paroi interne (50) du boîtier étanche à la poussière (46).

7. Appareil de brossage de pneumatique (10) selon l'une quelconque des revendications 2 à 6, comprenant, en outre, un ensemble formant brosse principale (42) agencé sur le piédestal de râpe (24) et entourant, au moins partiellement, au moins une partie de la râpe (22) et configuré pour pouvoir venir en engagement avec une enveloppe de pneu montée sur l'ensemble formant moyeu (18) lorsque la râpe (22) vient en engagement avec l'enveloppe de pneu, l'ensemble formant brosse principale (42) comprenant un côté supérieur et un côté inférieur.

8. Appareil de brossage de pneumatique (10) selon la revendication 7, comprenant, en outre, un ensemble formant brosse auxiliaire supporté sur le piédestal de râpe (24) et comprenant une brosse auxiliaire supérieure (70) agencée verticalement au-dessus du côté supérieur de l'ensemble formant brosse principale (42) et une brosse auxiliaire inférieure (72) agencée verticalement au-dessous du côté inférieur de l'ensemble formant brosse principale (42).

9. Appareil de brossage de pneumatique (10) pour brosser une enveloppe de pneu, comprenant :
un ensemble formant moyeu (18) pour supporter et faire tourner une enveloppe de pneu,
un piédestal de râpe (24) comprenant une râpe, la râpe (22) pouvant venir en engagement sélectivement avec une enveloppe de pneu supportée sur l'ensemble formant moyeu (18) ; et
un ensemble formant brosse principale (42) agencé sur le piédestal de râpe (24) et entourant, au moins partiellement, au moins une partie de la râpe (22) et configuré pour pouvoir venir en engagement avec une enveloppe de pneu montée sur l'ensemble formant moyeu (18) lorsque la râpe (22) engage l'enveloppe de pneu, l'ensemble formant brosse principale (42) comprenant un côté supérieur et un côté inférieur ;
**caractérisé par**
un ensemble formant brosse auxiliaire supporté sur le piédestal de râpe (24) et comprenant une brosse auxiliaire supérieure (70) agencée verticalement au-dessus du côté supérieur de l'ensemble formant brosse principale (42) et une brosse auxiliaire inférieure (72) agencée verticalement au-dessous du côté inférieur de l'ensemble formant brosse principale (42).

10. Appareil de brossage de pneumatique (10) selon la revendication 9, dans lequel le piédestal de râpe (24) supporte une brosse de texturisation (26) qui est apte à venir en engagement sélectivement avec une enveloppe de pneu supportée sur l'ensemble formant moyeu (24).

11. Appareil de brossage de pneumatique (10) selon la revendication 10, dans lequel un second ensemble formant brosse principale (44) est agencé sur le piédestal de râpe (24) et entourant, au moins partiellement, au moins une partie de la brosse de texturisation (26) et configuré pour pouvoir venir en engagement avec une enveloppe de pneu montée sur l'ensemble formant moyeu (18) lorsque la brosse de texturisation (26) engage l'enveloppe de pneu, le second ensemble formant brosse principale (44) comprenant un côté supérieur et un côté inférieur.

12. Appareil de brossage de pneumatique (10) selon la revendication 11, dans lequel la brosse auxiliaire supérieure (70) est agencée verticalement au-dessus du côté supérieur du second ensemble formant brosse principale (44) et la brosse auxiliaire inférieure (72) est agencée verticalement au-dessous du côté inférieur du second ensemble formant brosse principale (44).

13. Appareil de brossage de pneumatique (10) selon l'une quelconque des revendications 9 à 12, comprenant, en outre, un boîtier étanche à la poussière (46) entourant, au moins en partie, une enveloppe de pneu montée sur l'ensemble formant moyeu (18) et conçu pour aider à confiner la poussière et d'autres débris produits lorsque la râpe (22) vient en engagement avec une enveloppe de pneu sur l'ensemble formant moyeu (18).

14. Appareil de brossage de pneumatique (10) selon la revendication 13, dans lequel le boîtier étanche à la poussière (46) comprend une paroi latérale de forme arquée (48) qui s'étend autour d'au moins une partie d'une surface circonférentielle d'une enveloppe de pneu supportée sur l'ensemble formant moyeu (18).

15. Appareil de brossage de pneumatique (10) selon la revendication 14, dans lequel le boîtier étanche à la poussière (46) comprend des parois interne et externe (50, 52) reliées à la paroi latérale (48).

16. Appareil de brossage de pneumatique (10) selon la revendication 15, dans lequel la paroi externe (52) comprend une porte principale (54) qui est supportée pour déplacement entre des positions ouverte et fermée relativement à la paroi latérale (48) et la paroi interne (52).

17. Appareil de brossage de pneumatique (10) selon la revendication 16, dans lequel la paroi externe (52) comprend une porte interne (62) qui est supportée pour déplacement entre des positions ouverte et fermée relativement à une partie de la porte principale (54).

18. Appareil de brossage de pneumatique (10) selon l'une quelconque des revendications 15 à 17, dans lequel le piédestal de râpe (24) est apte à se déplacer jusque dans une position de brossage latérale et la porte interne (62) est configurée de manière que le déplacement du piédestal de râpe (24) jusque dans la position de brossage latérale vienne en engagement avec la porte interne (62) et déplace la porte interne (62) de la position fermée à la position ouverte.
